# EUROPEAN PATENT APPLICATION

(11) **EP 2 348 439 A1**
(43) Date of publication of application: **27.07.2011**
(21) Application number: 10252078.0
(22) Date of filing: 08.12.2010
(51) Int. Cl.: G06F 21/00

(54) **Automated security control using encoded security information**

(30) Priority: 22.12.2009 US 645278
(71) Applicant: Intel Corporation, Santa Clara, CA 95052 (US)
(72) Inventor: Hohndel, Dirk, Portland, OR 97219 (US)
(74) Representative: Beresford, Keith Denis Lewis

(57) **Abstract**

Embodiments of techniques and systems for automated security setup are described. A camera associated with a computing device may be used to capture an image of a multi-dimensional code, such as a QR code. The multi-dimensional code may contain information used to set up security or networking on the computing device. For example, the code may contain information used to connect the computing device to a wireless network, or a security certificate to facilitate secure internetworking. After the image is captured, a security setup application may decode the information contained in the code and use it to control security and networking on the computing device by manipulating APIs on the computing device. This prevents improper connections and/or mistakes in entering long, difficult pieces of security information. Other embodiments may be described and claimed.

## Description

### TECHNICAL FIELD

This application relates computer networking and security, and in particular, to providing for automated setup of security and networking features.

### BACKGROUND

Many existing electronic devices, such as laptops, netbooks, PDAs, and smart phones allow users to modify network and security settings. This is useful to users when they desire to change their networking connections, such as when encountering new wireless networks or switching between network options. Oftentimes, however, networking can be difficult for a user to setup without introducing errors and frustration.

For example, when attempting to use a wireless network in a public space, a user may have to select from multiple Service Set Identifiers (also known as "SSIDs") which identify available wireless networks. If multiple similarly-named SSIDs are broadcast, users may end up being confused as to which one is proper and safe for them to use. In other common scenarios, an available wireless network may not broadcast its presence, and thus forcing the user to enter an SSID by hand. If the SSID is complicated or spelled non-traditionally (or is in a language unfamiliar to the user), there is a real possibility the user will enter the SSID incorrectly. When this happens, the user may find himself or herself unable to connect, or, even worse, be connected to a *different,* unintended (and unsecure/untrustworthy) wireless network with a similarly-spelled SSID. This can be hazardous for lay users, who may not realize they are not properly connected.

Some networks utilize encryption, along with a password, a pass phrase, or a character string, such as a hex key, to prevent improper connections. In this scenario, a user is typically given both an indication of the SSID of the wireless network to connect to, as well as the password to type in response to a prompt. Unfortunately, this technique provides the same possibility for incorrect entry (of the password) as discussed above. This problem is compounded in the case of passwords, because frequently passwords have no inherent meaning to the user attempting to type them in. When a password is long and difficult to guess, users are more likely to enter it incorrectly and have a hard time correcting the error, even during a review. A similar issue can exist when the encryption requires entry of a character string, such as a string of hexadecimal digits. Such a string may comprise, according to various encryption implementations, 13, 26, or even 52 characters, for example. Thus, a user may find him or herself called upon to enter a string such as "6c736b64666f73766f73696468766f73646968766f7369647633343235" in order to utilize a network. Entry of such a long string without introducing errors is difficult.

Many of these same problems occur in other security and networking contexts, such as, for example, SSL, openvpn, and openssh. For example, to connect and interact with some secure networks, users are required to utilize a security certificate, such as a certificate authority ("CA") root certificate. In one scenario, the user will use the certificate to authenticate that the user, or the user's device, is permitted access on the network. In another, the user will use a known encryption key associated with the certificate to encrypt messages for secure transmission. In some usage cases, a user may receive a copy of a certificate through two different means, such as electronic and paper-printed, to ensure that it is securely transmitted. Thus, even when a user receives an electronic certificate, the user may have to enter separately-received certificate information by hand in order to verify that the certificate is valid.

But because security certificates utilize encryption, this by-hand entry may present issues similar to those present with wireless networking. Encryption keys, especially those used in security certificates, may be as long as hundreds or even thousands of characters. It is often impractical to expect a user to correctly enter this large an amount of data, especially when the data has no apparent structure to the user, such as in encryption keys or encrypted certificate data. Some systems may attempt to mitigate this problem by taking an image of the printed version of the certificate and using optical character recognition to extract the information. However, even using these techniques, the sheer size of the data, and the inexactitude of optical character recognition, means that undesired errors are likely to be introduced.

### BRIEF DESCRIPTION OF THE DRAWINGS

Embodiments of the present invention will be described by way of exemplary embodiments, but not limitations, illustrated in the accompanying drawings in which like references denote similar elements, and in which:
Figure 1 is diagram illustrating a usage example in accordance with various embodiments of the present disclosure;
Figure 2 is a block diagram illustrating one example of components in accordance with various embodiments;
Figure 3 is a block diagram illustrating another example of components in accordance with various embodiments;
Figure 4 is an example of encoded security information in accordance with various embodiments;
Figures 5a and 5b are examples of types of encoded security information in accordance with various embodiments;
Figure 6 illustrates an example security information acquisition process in accordance with various embodiments;
Figure 7 illustrates another example security information acquisition process in accordance with various embodiments;
Figure 8 illustrates an example security setup process in accordance with various embodiments; and
Figure 9 illustrates an example computing environment in accordance with various embodiments.

### DETAILED DESCRIPTION OF ILLUSTRATIVE EMBODIMENTS

Illustrative embodiments of the present invention include, but are not limited to, methods and apparatuses for performing automated security setup using entry of security information through a non-primary entry method, such as by scanning a multi-dimensional code to extract security information encoded therein. The techniques may use a dedicated application or computer process running on a device which extracts the security information from an image taken of a multi-dimensional code and directs setup of one or more security features for the device. Examples of security features which may be set up may include connection to a wireless network or use of a specified security certificate. By providing information in a relatively-compact multi-dimensional code, an entity that wishes to provide for secure interaction with a user can easily provide connection or security information while at the same time reducing the possibility that the information will be entered incorrectly.

Various aspects of the illustrative embodiments will be described using terms commonly employed by those skilled in the art to convey the substance of their work to others skilled in the art. However, it will be apparent to those skilled in the art that alternate embodiments may be practiced with only some of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order not to obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in one embodiment" or "in an embodiment" is used repeatedly. The phrase generally does not refer to the same embodiment; however, it may. The terms "comprising," "having," and "including" are synonymous, unless the context dictates otherwise. The phrase "A/B" means "A or B". The phrase "A and/or B" means "(A), (B), or (A and B)". The phrase "at least one of A, B and C" means "(A), (B), (C), (A and B), (A and C), (B and C) or (A, B and C)".

As discussed above, embodiments of the present techniques and systems include a wireless setup application which may facilitate setup of a wireless network through the use of a multi-dimensional code, such as a two-dimensional QR code. After the QR code is imported into a device, such as, for example, by capturing an image of the code, the application may extract structured information which may be encoded in the QR code. This information may then direct the application to set up the device to use a specified wireless network. Additionally, if the wireless network requires specific settings, including, for example, the use of a password or pass phrase, the application may include the setup of this information. In various embodiments, setup of a wireless network may be performed through the use of known APIs which are provided by security and networking services on the device, such as APIs provided by an operating system.

Embodiments of the present techniques and systems may also include a security certificate setup application which may facilitate setup and use of a security certificate, such as, for example, a root certificate. In various embodiments, certificate information may be encoded in a multi-dimensional code, such as a two-dimensional QR code.. After an image of the code is scanned, the certificate information may be extracted and used in future communication where security or trust is desired. Alternatively, in various embodiments the application may use encoded printed certificate information to verify an already-received security certificate known to a device.

While techniques and apparatuses discussed herein are discussed with reference to the setup of "security," this terminology may be understood to encompass various forms of security and networking which utilizes additional information for its setup, and in particular lengthy and/or difficult-to-input information. For example, "security" may encompass, in various embodiments, networking, wireless networking, encryption, and security certificates, and other forms of data. Such data, may be provided in a difficult-to-enter form or in other ways which are difficult or complex to transfer to a security-associated system. Additionally, in various embodiments, security-related information may not be information used to set up, modify, or maintain security protocols, but may instead be secure information used for other purposes. Thus, security information may include data that uses security-related technologies to prevent unauthorized reading, interception, tampering, or modification of the data itself or of other data transmitted that uses data contained in the security information to achieve a goal associated with the information. For example, in addition to the descriptions of security-related information discussed above, such information may include coded information related to online payments.

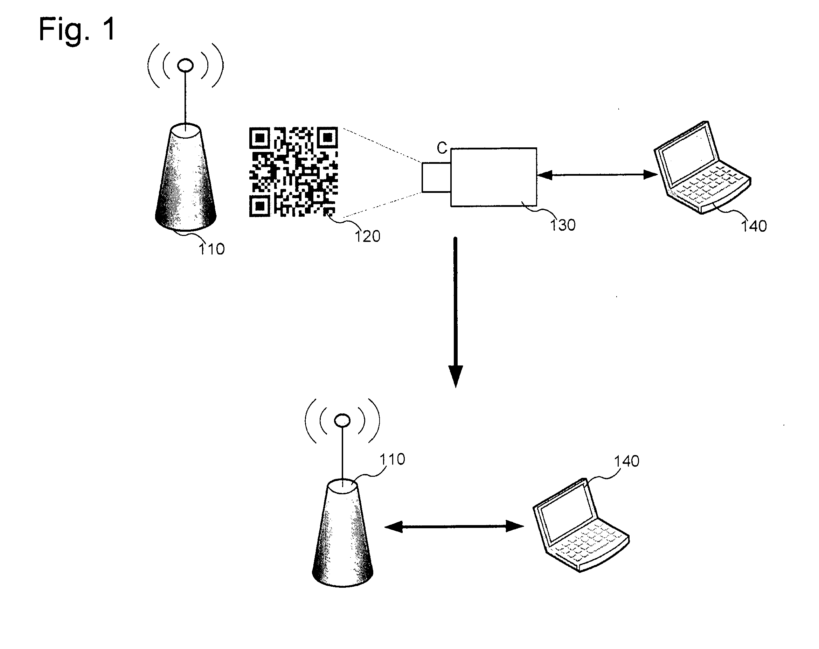

Figure 1 illustrates various embodiments of automated wireless setup techniques of the present disclosure. As discussed above, in various embodiments, a wireless network 110 may be made available. In order to provide access to the wireless network, in various embodiments a multi-dimensional code 120, illustrated in Figure 1 as a two-dimensional QR code, may be associated with the wireless network. In various embodiments, this association may be made available by a provider of the wireless network 110 through the use of a publicly-viewable display of the multi-dimensional code 120. In various embodiments, the multi-dimensional code may be displayed as printed on physical material, such as paper, plastic, or metal, or may be displayed on an electronic display.

While for the purposes of illustration, a QR code is used which displays a URL, in various embodiments the multi-dimensional code 120 may display different or more or less complex information, including formatted information. For example, XML code may be encoded in the multi-dimensional code 120. Additionally, in various embodiments meta data may be included in the information encoded in the multi-dimensional code including, but not limited to, descriptions of data encoded therein, version numbers, and/or error correction checksums (not illustrated). In various embodiments, the multi-dimensional code may take other forms as well and is not limited solely to the use of QR codes.

As illustrated in Figure 1, an electronic device 140, which is coupled to a camera 130, may be employed according to various embodiments. In various embodiments, the device 140 may include computing devices of various sizes, capabilities, and form factors, including, but not limited to, laptop, notebook, and desktop computers, netbooks, PDAs and smart phones. Additionally, while the illustrated embodiment illustrates camera 130 as a separate entity from computing device 140, in various embodiments, the camera may be integrated into the computing device 140. Thus, in one example, the computing device 140 may comprise a smart phone which itself contains an internal camera. In alternative embodiments (not illustrated), a scanner or other image receiving device may be used to acquire the code images instead of the camera 130.

While in the illustrated embodiment, the computing device 140 would comprise one or more networking capabilities, including a card or other device for wireless networking, in various embodiments, the computing device 140 may not include such capabilities and may utilize various embodiments of the present techniques toward setup of security or other services outside of wireless networks.

As illustrated in Figure 1 and alluded to earlier, embodiments of the present techniques may be used to set up a wireless network. Thus, the camera 130 of the device 140 may be used to capture an image of the multi-dimensional code 120 which is associated with wireless network 110. After this image capture, the image of the multi-dimensional code may be processed through the use of a setup application on the device and information extracted to set up the computing device 140 to use wireless network 110. As the bottom half of Figure 1 illustrates, after this setup, the computing device 140 may then interact with and communicate on the wireless network 110.

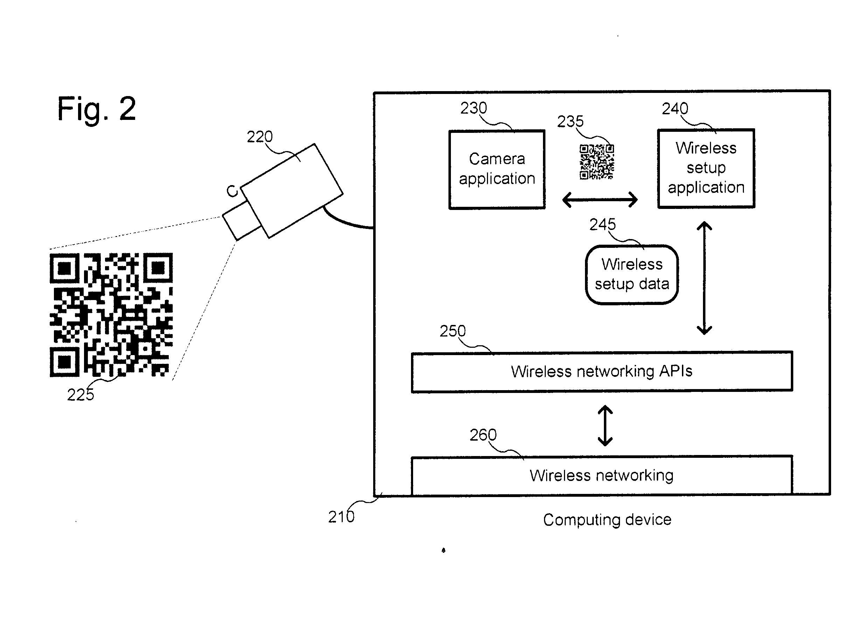

Figure 2 illustrates a block diagram of components and data flows which may be utilized within a computing device according to various embodiments to facilitate setup of a wireless network. As illustrated, and as discussed above, various embodiments include a camera 220 (which may, in various embodiments comprise the camera 130 illustrated in Figure 1) which may take images of a multi-dimensional code, such as the illustrated QR code 225. The camera may be coupled to a computing device 210, which may, in various embodiments comprise the computing device 140 illustrated in Figure 1. Similar to the discussion with respect to Figure 1, while Figure 2 illustrates a camera 220 which is external to the computing device 210, in various embodiments, the camera 220 may be, in whole or in part, internal to the computing device 210.

Various embodiments of the present techniques are performed with relation to applications and services which operate on the computing device 210. For example, the illustrated computing device 210 may comprise a camera application 230. This camera application 230 may be used to direct operation of the camera 220. Thus, when a user desires to capture an image of the multi-dimensional code 225, the user may direct the camera application to cause the camera to acquire the code image 235. This code image 235 may then, in various embodiments, be shared or transferred to a wireless setup application 240.

In various embodiments, the wireless setup application 240 itself may direct the camera application 230 to capture the image. In various alternative embodiments, the camera application 230 may capture the image 235 of the multi-dimensional code 225 without direction of the wireless setup application 240. In some such embodiments, the camera application may, after capturing the image, request direction from a user as to whether the wireless setup application should be launched and used to decode the information contained in the multi-dimensional code 225. In various embodiments, the camera application 230 may itself posses some capability of decoding the multi-dimensional code 225. In various embodiments, information in the multi-dimensional code 225 may direct the camera application to launch or otherwise communicate with the wireless setup application. Additionally, in various embodiments, the wireless setup application may comprise an independent application, an independent process, and/or one or more subroutines or libraries which are executed as subordinate to one or more other applications or processes.

The wireless setup application 240 may then use the information encoded in the image 235, illustrated as wireless setup data 245, to control one or more wireless networking APIs 250. These APIs 250 may, in turn control wireless networking services 260 to provide wireless networking capabilities to the computing device 210 according to the wireless setup data 245.

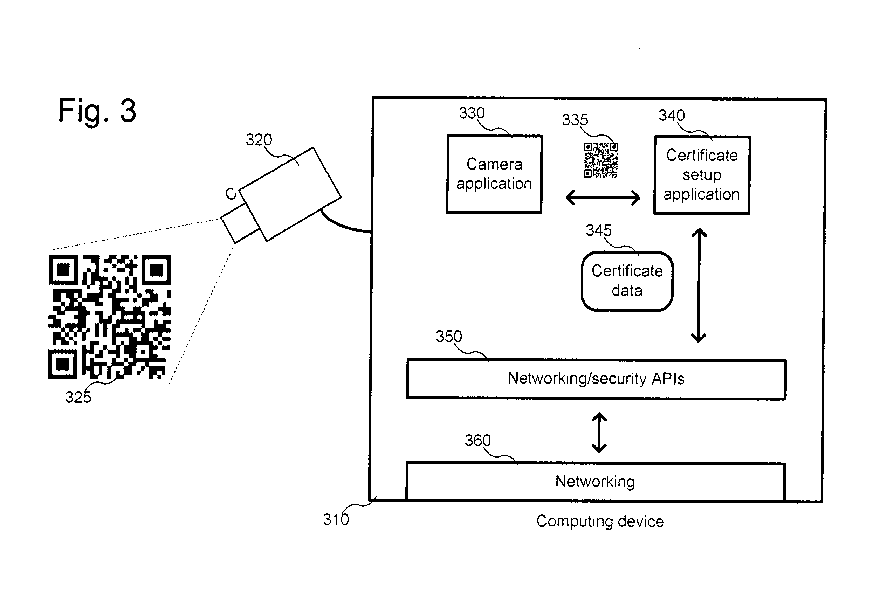

Figure 3 illustrates a block diagram of components and data flows which may be utilized within a computing device according to various embodiments to enable secure communication using a security certificate. As illustrated, and as discussed above, various embodiments include a camera 320 (which may, in various embodiments comprise the camera 130 illustrated in Figure 1 and/or the camera 220 illustrated in Figure 2) which may take images of a multi-dimensional code, such as the illustrated QR code 325. The camera may be coupled to a computing device 310, which may, in various embodiments comprise the computing device 140 illustrated in Figure 1. Similar to the discussion above, while Figure 3 illustrates a camera 320 which is external to the computing device 310, in various embodiments, the camera 320 may be, in whole or in part, internal to the computing device 310.

Various embodiments of the present techniques are performed with relation to applications and services which operate on the computing device 310. For example, the illustrated computing device 310 may comprise a camera application 330. This camera application 330 may be used to direct operation of the camera 320. Thus, when a user desires to capture an image of the multi-dimensional code 325, the user may direct the camera application to cause the camera to acquire the code image 335. This code image 335 may then, in various embodiments, be shared or transferred to a certificate setup application 340.

In various embodiments, the certificate setup application 340 itself may direct the camera application 330 to capture the image. In various alternative embodiments, the camera application 330 may capture the image 335 of the multi-dimensional code 325 without direction of the certificate setup application 340. In some such embodiments, the camera application may, after capturing the image, request direction from a user as to whether the wireless setup application should be launched and used to decode the information contained in the multi-dimensional code 325. In various embodiments, the camera application 330 may itself posses some capability of decoding the multi-dimensional code 325. In various embodiments, information in the multi-dimensional code 325 may direct the camera application to launch or otherwise communicate with the certificate setup application. Additionally, in various embodiments, the certificate setup application may comprise an independent application, an independent process, and/or one or more subroutines or libraries which are executed as subordinate to one or more other applications or processes.

The wireless setup application 340 may then use the information encoded in the image 335, illustrated in Figure 3 as certificate data 345, to control one or more networking/security APIs 350. These APIs 350 may, in turn, control networking services 360 to provide networking capabilities to the computing device 310 utilizing the certificate data 345.

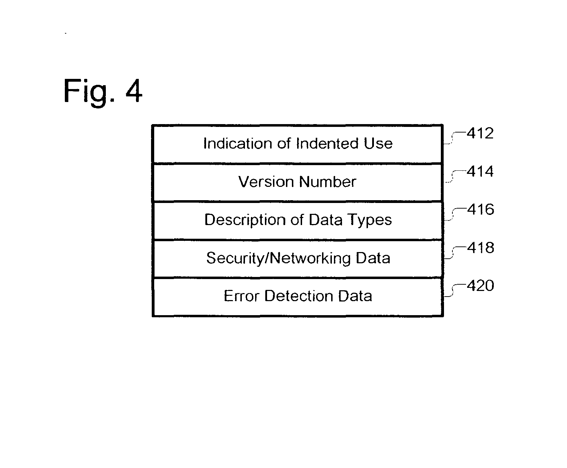

Figure 4 illustrates a example of a general structure of data elements which may be encoded in a multi-dimensional code according to various embodiments. The types of data illustrated in Figure 4 may be utilized with both the wireless network setup and the security certificate setup techniques described herein. In various embodiments, the illustrated data elements may be combined, divided, or omitted. In various embodiments, the data elements illustrated in Figure 4 may be decoded or interpreted by one or more components or processes of embodiments described herein.

The first illustrated data element is an indication of intended use element 412. In various embodiments, this indication may comprise a code or other data which indicates the purpose for which data is presently encoded in a multi-dimensional code. For example, the two-dimensional QR code 225 illustrated in Figure 2 may contain information at element 412 which indicates that the code is to be used to set up a wireless network. In the illustrated embodiment of Figure 3, by contrast, the indication of intended use element 412 may indicate that the two-dimensional QR code 325 contains security certificate information.

Next, Figure 4 illustrates a version number element 414. In various embodiments, the version number element 414 is encoded to provide versioning support for the structure of information encoded in the multi-dimensional codes. In various embodiments, a setup application may maintain knowledge of different versions of encoded security information. Different versions may include different information or be structured in different ways; by providing version numbers a setup application may be able to predict what type of information is encoded in a multi-dimensional code and interpret the code accordingly. For example, the information in the multi-dimensional code could comprise a compact, or possibly compressed, data block that a setup application can decode and interpret based solely or in part on a previously agreed-upon structure indicated by the version number element 414. Thus, in one example the setup application may know that, according to a version number, characters up to a particular escape code comprise an SSID, which is then followed immediately by an indication of encryption type, and then content which is determined according to encryption type (such as encryption keys in the following bytes for WEP encryption vs. information about an authentication protocol, followed by authentication data, encryption protocols, and encryption data for WPA2 encryption). In such a scenario, XML or other self-describing data formats may not be used to structure data. The use of version numbers may speed up decoding of the code as well as allowing for entities which publish these codes to evolve the structure of the encoded information over time.

Next, a description of data types element 416 may be included. In various embodiments, this description may comprise a list of data types encoded in the multi-dimensional code itself. In other embodiments, the description of data types may be a reference to another document or specification which itself describes a set of data types. In various embodiments, the description of data types may be combined with the version number element 414.

Next, the security/networking data element 418 is illustrated. In various embodiments, the description of data types element 416 and the security/networking data element 418 may be combined into a single element or a hierarchical structure which is self-descriptive. For example, the data may be encoded in the form of XML code which describes the data as it is presenting it. Next, error detection data element 420 is illustrated. This element may be used to help verify the correctness of data which is decoded from the multi-dimensional code. In various embodiments, error detection code may be implemented as a checksum or as more complex error detection data. In various embodiments, the error detection data may exist in lieu of, or in addition to, checksum or other error detection data which is provided in a multi-dimensional code specification and created at the time the multi-dimensional code is encoded and displayed.

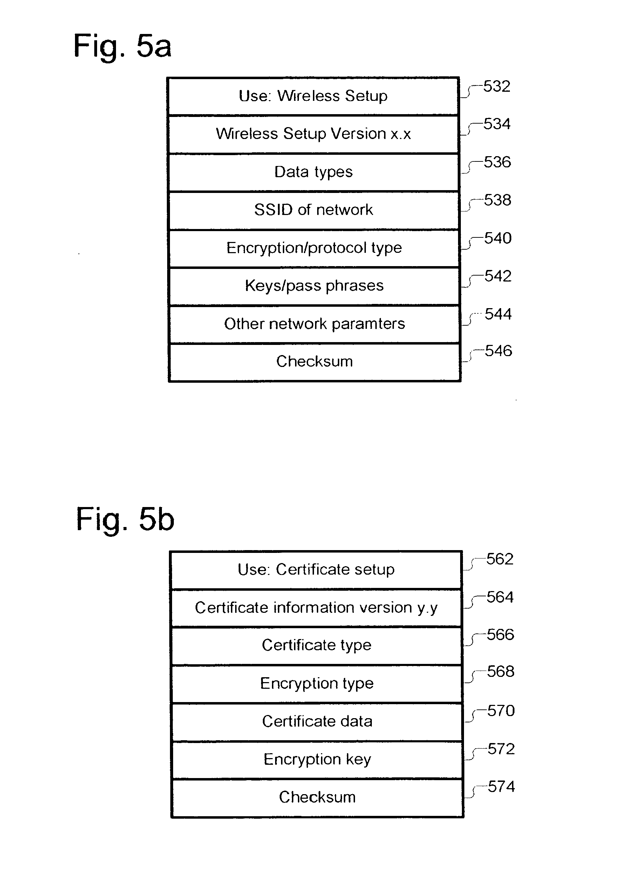

Figures 5a and 5b illustrate example implementations of structures of data elements which may be encoded in a multi-dimensional code according to various usage embodiments. For example, the data structure illustrated in Figure 5a may be used with a wireless network setup embodiment, such as that illustrated in Figure 2, and the data structure illustrated in Figure 5b may be used with a security certificate setup embodiment, such as that illustrated in Figure 3. In various embodiments, the illustrated data elements of Figures 5a and 5b may be combined, divided, or omitted in part. In various embodiments, the data elements illustrated in Figures 5a and 5b may be decoded or interpreted by one or more components or processes of embodiments described herein.

Figure 5a begins by illustrating a data element 532 which indicates that the data is to be used for wireless setup. This may be followed by data element 534, which illustrates a wireless setup version number. In various implementations, and as illustrated in Figure 5a, the version number encoded therein may be based on a different numbering system than a version number for a different intended use; alternatively, a version numbering system may be used across multiple uses, such that the version number wholly or partially identifies the intended use of the encoded information. As discussed above, in various embodiments, the version number may indicated a previously-agreed upon structure for other data, rather than using self describing data or including descriptions which are contained within the multi-dimensional code.

Next, Figure 5a illustrates a data element 536 which indicates data types which are encoded in the multi-dimensional code. For example, and as subsequently illustrated in data elements 538, 540, 542, and 544, the data type element 536 may indicate that the multi-dimensional code includes information about a wireless network SSID, a type of encryption and/or protocol used on the wireless network, encryption keys or pass phrases that may be used to gain access to the network, and other network parameters that may be used to connect, such as, for example, channel or proxy information. After this data description, the multi-dimensional code includes the SSID, encryption/protocol type, keys/pass phrases, and other parameter data elements themselves, illustrated as data elements 538, 540, 542, and 544. Additionally, Figure 5a illustrates that the multi-dimensional code includes a checksum element 546 as described above to allow a decoding process to check the validity of included data.

Figure 5b begins by illustrating a data element 562 which indicates that the data is to be used for certificate setup. This is followed by data element 564, which illustrates a certificate setup version number. As discussed above with reference to Figure 5a, in various implementations, and as illustrated in Figure 5b, the version number encoded therein may be based on a different numbering system than a version number for a different intended use; alternatively, a version numbering system may be used across multiple uses, such that the version number wholly or partially identifies the intended use of the encoded information.

Next, Figure 5b illustrates data elements 566 and 568 which indicates certificate and encryption types which may be encoded in the multi-dimensional code. After this data description, the multi-dimensional code may include the certificate data, and encryption key data, illustrated as data elements 570 and 572. Finally, Figure 5b illustrates that the multi-dimensional code may include a checksum element 574 as described above to allow a decoding process to check the validity of included data.

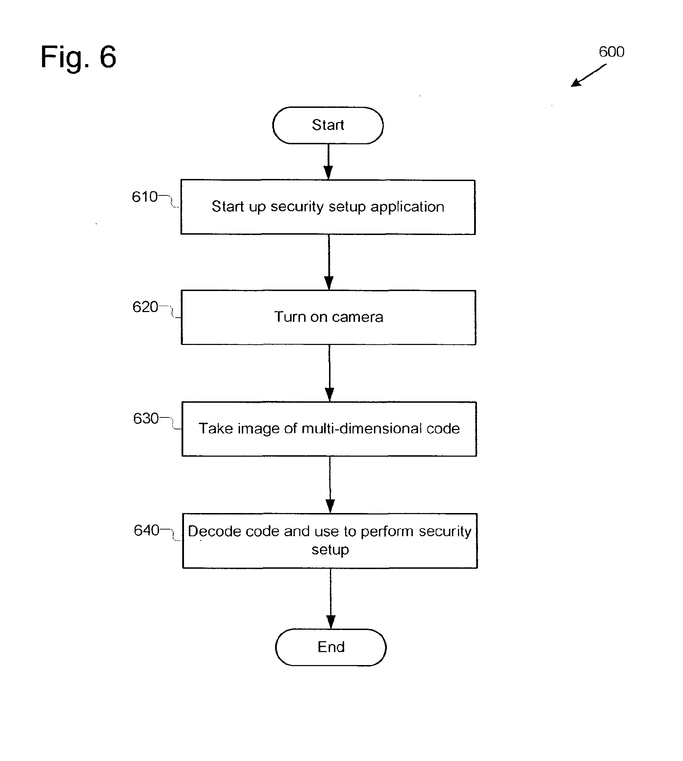

Figure 6 illustrates an example process 600 for using information encoded in a multi-dimensional code to perform an automated security setup for a computing device as directed by a security setup application in accordance with various embodiments. As illustrated, in various embodiments, processes performed at the blocks illustrated in Figure 6 may be combined or divided further into sub-processes, and may be re-ordered. While actions illustrated in Figure 6 are discussed with reference to the setup of "security," this terminology may be understood to encompass various forms of security and networking which utilizes additional information for its setup, and in particular lengthy and/or difficult to input information. For example, "security" may encompass, in various embodiments, networking, wireless networking, encryption, and security certificates.

The process begins at block 610 where a user or computer may start up a security application. In various embodiments, the user may start up the application by directing it to execute; in others, the application may be executed automatically upon startup or in association with the activation of a camera or other device. Next, at block 620, a user may turn on a camera to allow for multi-dimensional codes to be input into the system. In various embodiments the camera may be associated with the computing device, such as, for example, being incorporated into or otherwise attached to the computing device.

The illustrated process may then proceed to take an image of multi-dimensional code at block 630. As discussed above, this image may be taken at direction of the security setup application in accordance with various embodiments. Next, at block 640, the security setup application may decode the code and use the information encoded therein to perform a security setup such as, for example, the setup of a device to interact on a wireless network or to use a security certificate in networked communications.

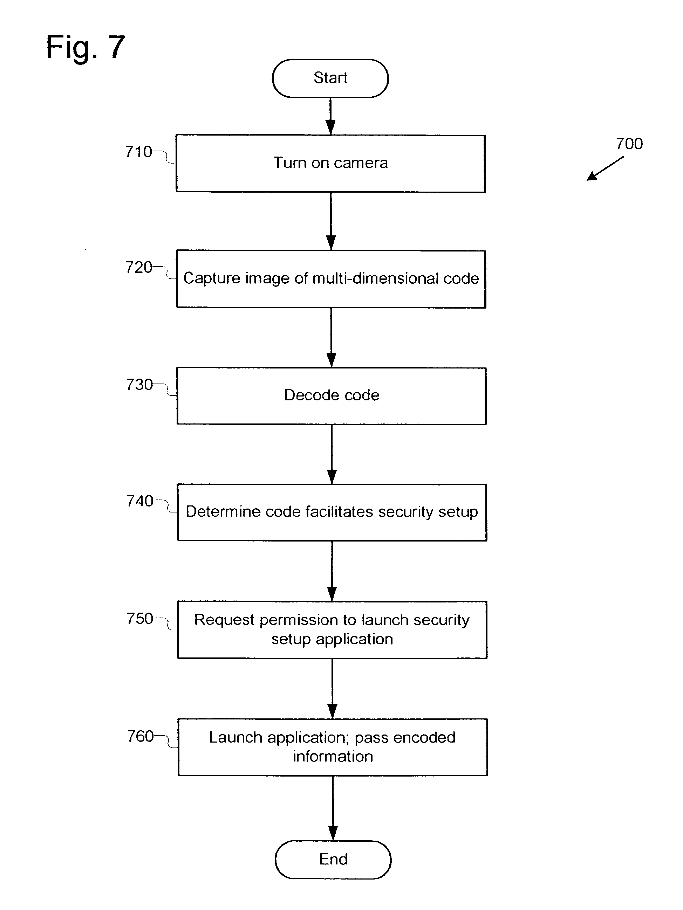

Figure 7 illustrates an example process 700 for using information encoded in a multi-dimensional code to perform an automated security setup for a computing device using a security setup application in accordance with various embodiments. Actions performed as part of the illustrated process of Figure 7 may be performed, in various embodiments, without direction of a security setup application. Instead, the process illustrated in Figure 7 is an example of how some actions in an automated security setup may be performed using non-security-setup-dedicated applications.

As illustrated, in various embodiments, processes performed at the blocks illustrated in Figure 7 may be combined or divided further into sub-processes, and may be re-ordered. While actions illustrated in Figure 7 are discussed with reference to the setup of "security," this terminology may be understood to encompass various forms of security and networking which utilizes additional information for its setup, and in particular lengthy and/or difficult to input information. For example, "security" may encompass, in various embodiments, networking, wireless networking, encryption, and security certificates. Such data, may be provided in a difficult-to-enter form or in other ways which are difficult or complex to transfer to a security-associated system. Additionally, in various embodiments, security-related information may not be information used to set up, modify, or maintain security protocols, but may instead be secure information used for other purposes. Thus, security information may include data that uses security-related technologies to prevent unauthorized reading, interception, tampering, or modification of the data itself or of other data transmitted that uses data contained in the security information to achieve a goal associated with the information. For example, in addition to the descriptions of security-related information discussed above, such information may include coded information related to online payments.

The process begins at block 710, where a user or computer may turn on a camera to capture an image of the multi-dimensional code. In various embodiments the camera may be associated with the computing device, such as, for example, being incorporated into or otherwise attached to the computing device. Next, at block 720, the user may direct the camera, using, in various embodiments, a camera application, to capture an image of the multi-dimensional code. Then, at block 730, the code may be decoded. In various embodiments, this decoding may be performed by the camera application with no input from a security setup application. In alternative embodiments, a multi-dimensional code reading application, such as a QR code reader application, may be employed to decode some or all of the information in the multi-dimensional code before utilizing the security setup application.

Next, at block 740, the application which decoded the multi-dimensional code may determine that a security setup is to be facilitated by the code. In one embodiment, this may be done by identifying an intended use identifier located within the multi-dimensional code or an application identifier which points to an automated security setup application. This may be done, in some embodiments, though the use of URLs or other information which identify that setup information is included, along with a mapping on the computing device that causes the automated security setup application to be executed to process this information. In various embodiments, the computing device may then request permission from a user to launch the security setup application at block 750 in order to continue with modification or setup of various security features. The process may then continue, if such permission is requested and given, to block 760, where the security setup application is launched and is passed the encoded information to process. In various embodiments, the passed information may still be in the form of a multi-dimensional image, or may be decoded in whole or in part for processing by the security setup application.

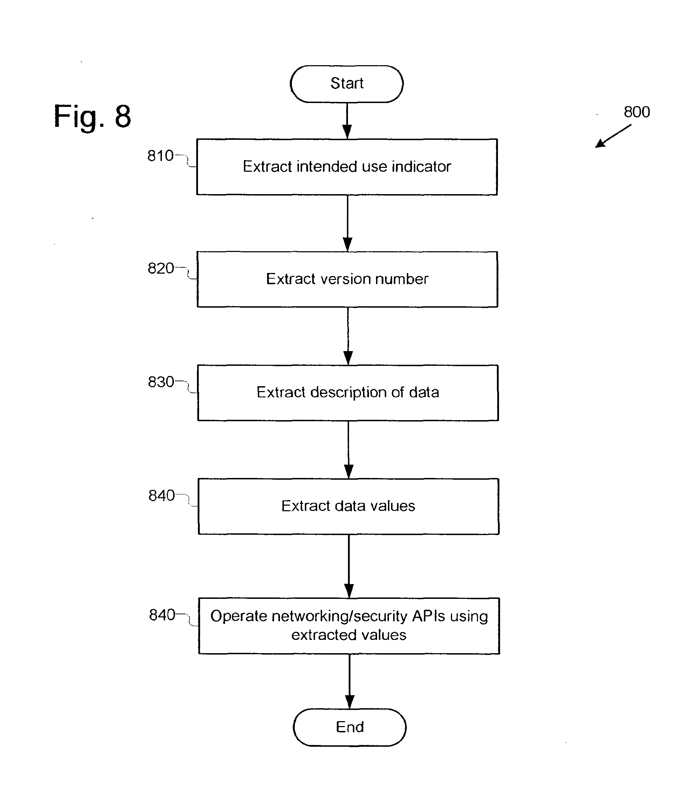

Figure 8 illustrates an example process 800 for a security setup application to use information encoded in a multi-dimensional code to perform the automated security setup. In various embodiments, the process of Figure 8 may be performed after information is acquired from a multi-dimensional code according to a process such as those described above with respect to Figures 6 and 7. As illustrated, in various embodiments, processes performed at the blocks illustrated in Figure 8 may be combined or divided further into sub-processes, and may be re-ordered. While actions illustrated in Figure 8 are discussed with reference to the setup of "security," this terminology may be understood to encompass various forms of security and networking which utilizes additional information for its setup, and in particular lengthy and/or difficult to input information. For example, "security" may encompass, in various embodiments, networking, wireless networking, encryption, and security certificates. Such data, may be provided in a difficult-to-enter form or in other ways which are difficult or complex to transfer to a security-associated system. Additionally, in various embodiments, security-related information may not be information used to set up, modify, or maintain security protocols, but may instead be secure information used for other purposes. Thus, security information may include data that uses security-related technologies to prevent unauthorized reading, interception, tampering, or modification of the data itself or of other data transmitted that uses data contained in the security information to achieve a goal associated with the information. For example, in addition to the descriptions of security-related information discussed above, such information may include coded information related to online payments.

The process begins at block 810, where the security setup application may extract an indicator of the intended use of the code. Next, at block 820, the security setup application may extract a version number for the code, followed by extracting a description of the data contained in the code at block 830. In various embodiments, using the information extracted at blocks 810-830, the security setup application can determine what the structure of the information contained in the code is, and can know to what parameters and settings the actual data payload of the multi-dimensional code will apply, as well as APIs which may be used to control the computing device to perform the desired security setup. Next, at block 840, the security setup application may extract data values for the data types which were determined earlier after the processes of blocks 810-830. Additionally, at block 840, the security setup application may operate networking and/or security APIs using the extracted data values and the knowledge of their meaning gained in the previous actions. For example, the security setup application may modify values used by one or more security features or provide new values for these features; alternatively, security features, protocols, or processes may be turned on or off, or may be stopped or started. After performing the setup using these APIs, the process may end.

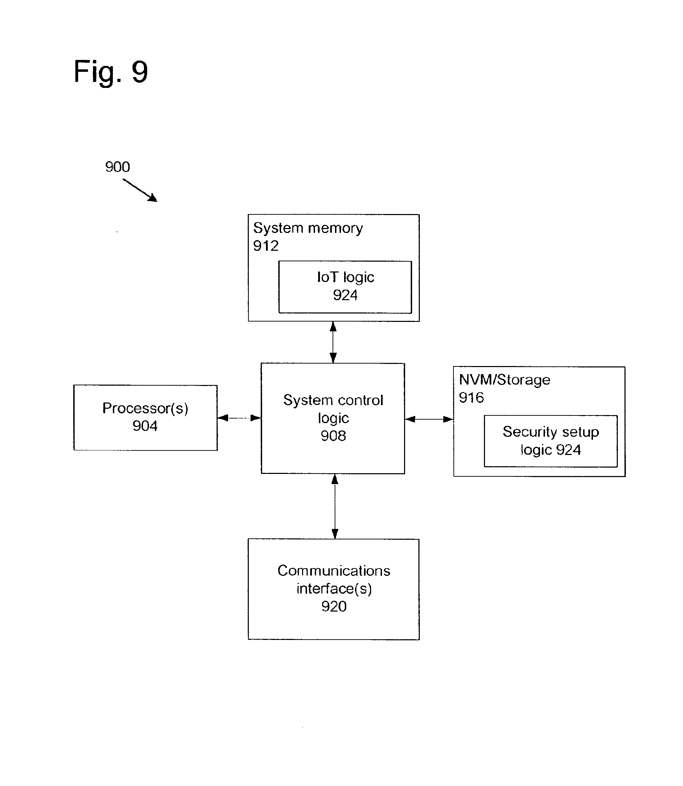

The techniques and apparatuses described herein may be implemented into a system using suitable hardware and/or software to configure as desired. Figure 9 illustrates, for one embodiment, an example system 900 comprising one or more processor(s) 904, system control logic 908 coupled to at least one of the processor(s) 904, system memory 412 coupled to system control logic 908, non-volatile memory (NVM)/storage 916 coupled to system control logic 908, and one or more communications interface(s) 920 coupled to system control logic 908.

System control logic 908 for one embodiment may include any suitable interface controllers to provide for any suitable interface to at least one of the processor(s) 904 and/or to any suitable device or component in communication with system control logic 908.

System control logic 908 for one embodiment may include one or more memory controller(s) to provide an interface to system memory 912. System memory 912 may be used to load and store data and/or instructions, for example, for system 900. System memory 912 for one embodiment may include any suitable volatile memory, such as suitable dynamic random access memory (DRAM), for example.

System control logic 908 for one embodiment may include one or more input/output (I/O) controller(s) to provide an interface to NVM/storage 916 and communications interface(s) 920.

NVM/storage 916 may be used to store data and/or instructions, for example. NVM/storage 916 may include any suitable non-volatile memory, such as flash memory, for example, and/or may include any suitable non-volatile storage device(s), such as one or more hard disk drive(s) (HDD(s)), one or more solid-state drive(s), one or more compact disc (CD) drive(s), and/or one or more digital versatile disc (DVD) drive(s) for example.

The NVM/storage 916 may include a storage resource physically part of a device on which the system 900 is installed or it may be accessible by, but not necessarily a part of, the device. For example, the NVM/storage 916 may be accessed over a network via the communications interface(s) 920.

System memory 912 and NVM/storage 916 may include, in particular, temporal and persistent copies of security setup logic 924, respectively. The security setup logic 924 may include instructions that when executed by at least one of the processor(s) 904 result in the system 900 performing automated security setup actions as described in conjunction with, for example, the wireless setup or certificate setup applications described herein. In some embodiments, the security setup logic 924 may additionally/alternatively be located in the system control logic 908.

Communications interface(s) 920 may provide an interface for system 400 to communicate over one or more network(s) and/or with any other suitable device. Communications interface(s) 920 may include any suitable hardware and/or firmware. Communications interface(s) 920 for one embodiment may include, for example, a network adapter, a wireless network adapter, a telephone modem, and/or a wireless modem. For wireless communications, communications interface(s) 920 for one embodiment may use one or more antenna(s).

For one embodiment, at least one of the processor(s) 904 may be packaged together with logic for one or more controller(s) of system control logic 908. For one embodiment, at least one of the processor(s) 904 may be packaged together with logic for one or more controllers of system control logic 908 to form a System in Package (SiP). For one embodiment, at least one of the processor(s) 904 may be integrated on the same die with logic for one or more controller(s) of system control logic 908. For one embodiment, at least one of the processor(s) 904 may be integrated on the same die with logic for one or more controller(s) of system control logic 908 to form a System on Chip (SoC).

In various embodiments, system 900 may have more or less components, and/or different architectures.

Although specific embodiments have been illustrated and described herein, it will be appreciated by those of ordinary skill in the art that a wide variety of alternate and/or equivalent implementations may be substituted for the specific embodiments shown and described, without departing from the scope of the embodiments of the present invention. This application is intended to cover any adaptations or variations of the embodiments discussed herein. Therefore, it is manifestly intended that the embodiments of the present invention be limited only by the claims and the equivalents thereof.

This disclosure includes all the subject matter recited in the following clauses:
1. A computer-implemented method comprising:
   at a computing device, obtaining an image of a multi-dimensional code;
   at the computing device, analyzing the multi-dimensional code to identify one or more pieces of security-related information encoded therein; and
   at the computing device, directing modification of one or more security features of the computing device based at least in part on the security-related information.
2. The method of clause 1, wherein obtaining an image of a multidimensional code comprises receiving the image of the multi-dimensional code from a camera coupled to the computing device.
3. The method of clause 2, wherein obtaining an image of a multi-dimensional code further comprises directing the camera coupled to the computing device to capture the image of the multi-dimensional code.
4. The method of clause 2, further comprising, at the computing device:
   taking an image of the multi-dimensional code; and
   asking a user if the information in the multi-dimensional code should be used to modify of the one or more security features.
5. The method of clause 1, wherein obtaining an image of a multi-dimensional code comprises receiving a scanned image of a two-dimensional code.
6. The method of clause 1, wherein analyzing the multi-dimensional code comprises identifying a descriptor for the security-related information encoded therein.
7. The method of clause 1, wherein analyzing the multi-dimensional code comprises identifying one or more encryption keys as pieces of security-related information encoded therein.
8. The method of clause 7, wherein analyzing the multi-dimensional code further comprises identifying one or more encryption types for the one or more encryption keys.
9. The method of clause 1, wherein analyzing the multi-dimensional code comprises identifying a version number for the security-related information encoded therein.
10. The method of clause6, wherein, when the descriptor shows that the multi-dimensional code comprises information related to a wireless network, directing modification of one or more security features of the computing device includes directing the computing device to use the wireless network.
11. The method of clause 10, wherein analyzing the multi-dimensional code comprises identifying an identifier of the wireless network.
12. The method of clause6 wherein, when the descriptor shows that the multi-dimensional code comprises information related to a security certificate, directing modification of one or more security features of the computing device comprises directing the computing device to use the security certificate during network communications.
13. The method of clause 12, wherein analyzing the multi-dimensional code comprises identifying a certificate type for the security certificate.
14. The method of clause 13, wherein the security certificate is a certificate authority root certificate.
15. The method of clause 6, wherein, when the descriptor shows that the multi-dimensional code comprises information that uses security-related information to prevent unauthorized access of data contained in the multi-dimensional code or of other data transmitted that uses data contained in the multi-dimensional code, modification of one or more security features comprises using the security-related information during communications involving the data contained in the multi-dimensional code.
16. A system comprising:
   a networking interface configured to facilitate communications with a network;
   a computer processor coupled to the networking interface;
   one or more networking control modules coupled to the networking interface, and configured to control networking communications on the system; and
   a security enabling module executable by the processor and configured, upon execution by the processor, to cause the system to:
      extract security modification information from a multi-dimensional code image; and
      direct the one or more networking control modules to modify controlling of networking communications on the system.
17. The system ofclause 16, further comprising a storage memory coupled to the computer processor, and a camera coupled to the storage memory, wherein the security enabling module is further configured, upon execution by the computer processor, to store multi-dimensional code images captured by the camera into the storage memory.
18. The system of clause 17, wherein the security enabling module is further configured, upon execution by the computer processor, to direct the camera to capture multi-dimensional code images.
19. The system of clause 16, wherein:
   the security enabling module is configured, upon execution by the computer processor, to extract a wireless networking identifier, an identifier of a wireless networking security protocol and one or more wireless networking encryption keys from the multi-dimensional code image; and
   the one or more networking control modules comprise a wireless networking modification module.
20. The system of clause 16, wherein:
   the security enabling module is configured, upon execution by the computer processor, to extract an identifier that a root certificate is encoded in the multi-dimensional code, an identifier of an encryption method used in the certificate; and one or more encryption keys from the two-dimensional code image; and
   the one or more networking control modules comprise a networking encryption modification module.
21. One or more computer-readable storage media containing instructions which, upon execution by a computer system, cause the computer system to perform operations comprising:
   obtaining by the computer system, an image of a two-dimensional code from a camera coupled to the computer system;
   analyzing by the computer system, the two-dimensional code to identify one or more pieces of security-related information encoded therein; and
   directing by the computer system, modification of one or more security features of the computing device based on the security-related information.
22. The computer-readable storage media of cause 21, wherein analyzing the two-dimensional code comprises identifying a descriptor for the security-related information encoded therein.
23. The computer-readable storage media of clause 22, wherein:
   the descriptor shows that the two-dimensional code comprises information related to a wireless network, directing modification of one or more security features of the computing device comprises directing the computing device to use the wireless network; and
   analyzing the two-dimensional code comprises identifying an identifier of the wireless network.
24. The computer-readable storage media of clause 22, wherein:
   the descriptor shows that the two-dimensional code comprises information related to a root certificate, directing modification of one or more security features of the computing device comprises directing the computing device to use the root certificate during network communications; and
   analyzing the two-dimensional code comprises identifying a certificate type for the security certificate.
25. The computer-readable storage media of clause 21, wherein analyzing the two-dimensional code comprises:
   identifying one or more encryption keys as pieces of security-related information encoded therein;
   identifying one or more encryption types for the one or more encryption keys; and
   identifying a version number for the security-related information encoded therein.
26. A system comprising:
   means for obtaining an image of a two-dimensional code from a camera coupled to the system;
   means for analyzing the two-dimensional code to identify one or more pieces of security-related information encoded therein; and
   means for directing modification of one or more security features of the system based at least in part on the security-related information.
27. The system of clause 26, wherein means for analyzing the two-dimensional code comprises means for identifying a descriptor for the security-related information encoded therein.
28. The system of clause 27, wherein:
   the descriptor shows that the two-dimensional code comprises information related to a wireless network, means for directing modification of one or more security features of the computing device comprises means for directing the computing device to use the wireless network; and
   means for analyzing the two-dimensional code comprises identifying an identifier of the wireless network.
29. The system of clause 27, wherein:
   the descriptor shows that the two-dimensional code comprises information related to a root certificate, means for directing modification of one or more security features of the computing device comprises means for directing the computing device to use the root certificate during network communications; and
   means for analyzing the two-dimensional code comprises identifying a certificate type for the security certificate.
30. The system of clause 26, wherein analyzing the two-dimensional code comprises:
   means for identifying one or more security keys as pieces of security-related information encoded therein;
   means for identifying one or more encryption types for the one or more encryption keys; and
   means for identifying a version number for the security-related information encoded therein.

## Claims

1. A computer-implemented method comprising:
at a computing device, obtaining an image of a multi-dimensional code;
at the computing device, analyzing the multi-dimensional code to identify one or more pieces of security-related information encoded therein; and
at the computing device, directing modification of one or more security features of the computing device based at least in part on the security-related information.

2. The method of claim 1, wherein obtaining an image of a multidimensional code comprises receiving the image of the multi-dimensional code from a camera coupled to the computing device.

3. The method of claim 2, further comprising, at the computing device:
taking an image of the multi-dimensional code; and
asking a user if the information in the multi-dimensional code should be used to modify of the one or more security features.

4. The method of claim 1, wherein obtaining an image of a multi-dimensional code comprises receiving a scanned image of a two-dimensional code.

5. The method of claim 1, wherein analyzing the multi-dimensional code comprises identifying a descriptor for the security-related information encoded therein.

6. The method of claim 1, wherein analyzing the multi-dimensional code comprises identifying one or more encryption keys as pieces of security-related information encoded therein.

7. The method of claim 1, wherein analyzing the multi-dimensional code comprises identifying a version number for the security-related information encoded therein.

8. The method of claim 5, wherein, when the descriptor shows that the multi-dimensional code comprises information related to a wireless network, directing modification of one or more security features of the computing device includes directing the computing device to use the wireless network.

9. The method of claim 5, wherein, when the descriptor shows that the multi-dimensional code comprises information related to a security certificate, directing modification of one or more security features of the computing device comprises directing the computing device to use the security certificate during network communications,

10. The method of claim 5, wherein, when the descriptor shows that the multi-dimensional code comprises information that uses security-related information to prevent unauthorized access of data contained in the multi-dimensional code or of other data transmitted that uses data contained in the multi-dimensional code, modification of one or more security features comprises using the security-related information during communications involving the data contained in the multi-dimensional code.

11. A system comprising:
a networking interface configured to facilitate communications with a network;
a computer processor coupled to the networking interface;
one or more networking control modules coupled to the networking interface, and configured to control networking communications on the system; and
a security enabling module executable by the processor and configured, upon execution by the processor, to cause the system to:
extract security modification information from a multi-dimensional code image;
and
direct the one or more networking control modules to modify controlling of networking communications on the system.

12. The system of claim 11, further comprising a storage memory coupled to the computer processor, and a camera coupled to the storage memory, wherein the security enabling module is further configured, upon execution by the computer processor, to store multi-dimensional code images captured by the camera into the storage memory.

13. The system of claim 11, wherein:
the security enabling module is configured, upon execution by the computer processor, to extract a wireless networking identifier, an identifier of a wireless networking security protocol and one or more wireless networking encryption keys from the multi-dimensional code image; and
the one or more networking control modules comprise a wireless networking modification module.

14. The system of claim 11, wherein:
the security enabling module is configured, upon execution by the computer processor, to extract an identifier that a root certificate is encoded in the multi-dimensional code, an identifier of an encryption method used in the certificate; and one or more encryption keys from the two-dimensional code image; and
the one or more networking control modules comprise a networking encryption modification module.

15. A storage medium comprising instructions which when executed by a computer system carry out all of the steps of a method as claimed in any one of claims 1 to 10.
